# EUROPEAN PATENT SPECIFICATION

(11) **EP 1 307 380 B1**
(45) Date of publication and mention of the grant of the patent: **17.01.2007**
(21) Application number: 01958724.5
(22) Date of filing: 25.07.2001
(51) Int. Cl.: B62D 33/04, E04C 3/02

(54) **SWITCH CONTAINER AND BEAM INCLUDED THEREIN**
AUSWECHSELBEHÄLTER UND EINGEBETTETER TRÄGER DAFÜR
CONTENEUR POUR CHARGES ET POUTRE UTILISEE

(30) Priority: 01.08.2000 SE 0002803
(43) Date of publication of application: 07.05.2003
(73) Proprietor: Compo AB, 380 53 Fliseryd (SE)
(72) Inventor: ISHAGEN, Göran, S-380 53 Fliseryd (SE)
(74) Representative: Wallengren, Yngvar
(86) International application number: PCT/SE2001/001665
(87) International publication number: WO 2002/010003

(56) References cited:
- EP-A1- 0 783 991
- WO-A1-96/31667
- DE-A1- 3 937 969

## Description

### TECHNICAL FIELD

The present invention relates to a load container for use on a truck chassis, the container being disposed for release from the chassis and for a free-standing position in which the container rests on a number of support legs, and the container having a roof, a number of side walls and a bottom which includes at least one longitudinal beam for supporting the bottom.

The present invention further relates to a beam including at least a first and a second plate with an adhesive layer therebetween.

### BACKGROUND ART

It is previously known in the art to dispose containers on trucks. The containers may be fixedly mounted on the trucks, but it is occasionally desirable to employ so-called switch chassis with replaceable load flatbeds or load containers. It is then possible to employ the same truck chassis for different containers. A fully loaded container may be parked in place with the aid of support legs, and the switch chassis may be used for other transportation, at the same time as the first-mentioned container is unloaded.

The support legs are four in number. The positions of the anchorage points of the support legs are disposed according to applicable international standards, which implies that they are located at each side edge, approximately 1 m from the short sides of the load container. The anchorages include brackets which are riveted to the bottom of the load container from the outside. The ends of the support legs are passed in inside the brackets from the side and are locked in this position.

In the prior art types of switch chassis and load containers, use is made of a switch flatbed frame between the chassis proper and the load container. The containers available on the market are constructed from welded or rolled beam profiles, which implies that the containers are relatively heavy. It has also been necessary to provide the containers with cross beams at the anchorage points for the support legs.

Attempts have also been made to manufacture the load containers in a sandwich technique, which implies that thin metal sheet of a few millimetres' thickness is adhered to an insulating core layer. However, it has proved difficult to achieve sufficient rigidity. In order to increase the rigidity, this sandwich construction has been provided with reinforcing beams on its outside. If the beams are of conventional type, they are quite heavy and bulky, so attempts have been made to manufacture these beams using a sandwich technique as well, in which event several metal sheets are adhered to one another. These attempts have not proved particularly successful - on loading of the beams the adhesive joints fail, since it is difficult for the adhesive to absorb shearing forces. This entails that the metal sheets will move in relation to one another, and the outward flexing of the beams is greater than desired.

WO 96/31667 discloses a construction wherein one or more plates are designed for joining two or more beams aligned with one another or at an angle. The construction results in strong joints, but the rigidity of the beams as a whole is not affected. Said document forms the basis for the preamble of claim 6.

### PROBLEM STRUCTURE

The object of the present invention is to realise a rigid construction whose weight is slight in relation to its payload. The present invention also has for its object to realise beams which may be included in the construction. The weight of the beams is also slight in relation to the load they withstand without appreciable outward bending. In such instance, the object of the invention is also to obviate the drawbacks inherent in the prior art technology.

### SOLUTION

The objects forming the basis of the present invention will be attained if the load container intimated by way of introduction is given the characterising features that the beam includes at least a first and second plate with an adhesive layer therebetween, and that the plates are mechanically locked to one another for preventing or reducing shearing stresses in the adhesive joint.

Concerning the beam, the objects of the present invention will be attained if this is given the characterising feature that the metal plates are mechanically locked to one another for preventing or reducing shearing stresses in the adhesive joint and that the plates are substantially of the same mutual length.

### BRIEF DESCRIPTION OF THE ACCOMPANYING DRAWINGS

The present invention will now be described in greater detail hereinbelow, with particular reference to the accompanying Drawings. In the accompanying Drawings:
- Fig. 1: is a partial view straight from above of a bottom included in the load container, partly cut away;
- Fig. 2: is a vertical, transverse section of the bottom included in the load container and the beams included therein, taken along the section line A-A in Fig. 1;
- Fig. 3a: is a plan view of a beam profile included in the bottom, partly in the opened state;
- Fig. 3b: is a view corresponding to that of Fig. 3a of a reinforcing plate included in the beam profile;
- Fig. 4: is a perspective view of an end region of the beam included in the load container as shown in Fig. 3a with a reinforcing plate; and
- Fig. 5: is a straight sectional view of the mechanical locking between two of the plates included in the beam, taken along the section line B-B in Fig. 4.

### DESCRIPTION OF PREFERRED EMBODIMENT

The present invention relates to a load container which is principally intended for a switch chassis. This implies that the load container in which the load is stored is not fixedly secured to one and the same truck chassis, but the container may be parked free-standing from tractor units and other prime movers, whether there is a load in the container or not. The chassis of the tractor unit and the underside of the load container are designed such that load containers and truck chassis are mutually interchangeable. Hence, it is possible to use the truck for other duties at the same time as the load container is loaded or unloaded. Only when the load container is ready for transport does a tractor unit with a switch chassis need to be coupled to the load container.

The load container is provided with walls, generally four in number, a roof and floor. One or more of the walls is provided with doors. It is very common that the rear end of the container is provided with doors or a tailgate, but it is also desirable to be able to provide the longitudinal sides of the load container with one or more doors. As will be apparent from the following disclosure, the construction according to the present invention makes it easier for more and larger doors to be provided on the load container.

In the preferred embodiment, all outer walls, floor and roof of the load container are manufactured using a so-called sandwich technique. This technique entails that planar sheets of large planar extent are adhered to a filler or a so-called core material, which is advantageously thermally insulating. The planar outer sheets in the preferred embodiment are manufactured from metal, preferably sheet metal, but other materials such as aluminium, hard plastic or plywood are also conceivable. In the preferred embodiment, the thermal insulation consists of polystyrene, which is available, for example, under the trademark Styrofoam^{™}. The insulating filler or core is connected to the superjacent metal sheets with the aid of an adhesive. The core material is advantageously provided with elongate grooves in order to prevent air blisters between the core material and the superjacent metal sheets. If air blisters are in the process of being formed between the core material and the covering surface layer during the adhesion, this air may be led to an adjacent groove and thereby be bled out.

The bottom of the load container and the structural parts included therein are exposed to extreme stresses. During transport, such stresses are dynamic, among other things because of unevenness in the road surface. However, in such instance the load container is firmly anchored in the chassis at several points and is supported, without being fixedly anchored, in a further number of points. In such instance, the load stresses are distributed over a large number of support points and downward bending in the bottom of the container between these points will be particularly extensive.

When the load container rests only on the support legs, there is, granted, a minimum of dynamic stress loading, but since the support points are few in number, the downward bending between the support points will be at a maximum. The downward bending is greatest at the longitudinal sides, since the distance between the support points is greatest there.

In order for the load container to function as intended, in particular if it is to be possible to open and close side-hung doors without difficulty, it is extremely important that the bottom is so rigid that no appreciable downward bending takes place, even when the load container is fully loaded and is parked on its support legs. Otherwise, the doors will not fit into the door openings and there is a risk that the locking devices of the container will not function. This problems becomes more manifest the wider the doors are.

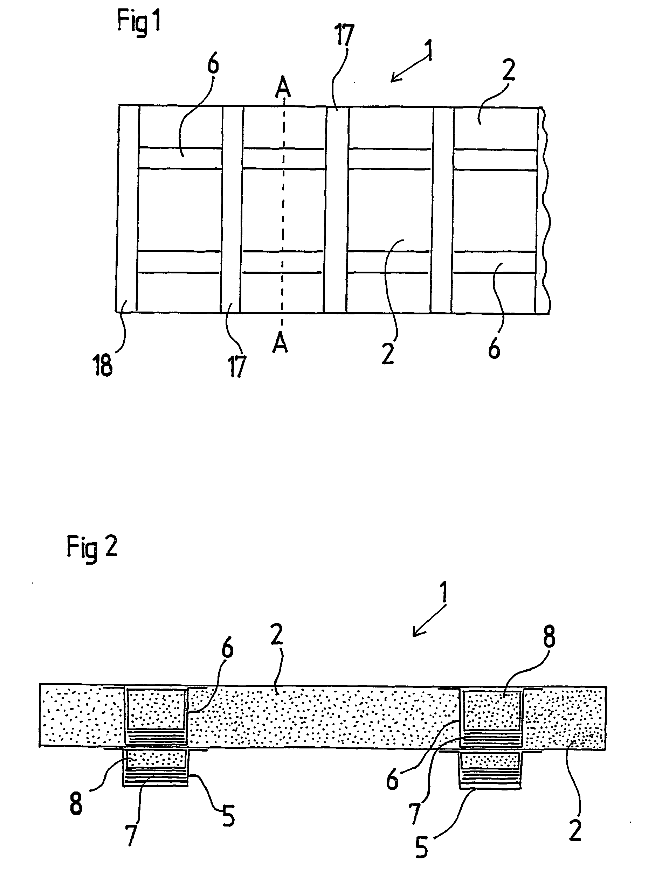

Fig. 1 shows a partly cut-away bottom 1 of a load container. The bottom 1 has a core 2 which is provided with an upper sheet or panel 3 and a lower sheet or panel 4 in the above-described manner in a sandwich technique. Within the bottom 1, i.e. between the upper sheet 3 and the lower sheet 4, there is disposed a plurality of transverse beams 17 which are manufactured by a sandwich technique as will be described in detail below. In the preferred embodiment, the transverse beams 17 are eleven in number. At the ends of the bottom 1, there are disposed transverse end beams 18 of Z-profile. Between the transverse beams 17, 18, core material 2 is disposed and shorter beam pieces 6 in the longitudinal direction of the bottom 1. The beam pieces 6 are also preferably manufactured using the same sandwich technique as the transverse beams 17.

As will be apparent from Fig. 2, the underside of the bottom 1, i.e. on the outside of the lower panel or sheet 4, there are disposed two longitudinal beams 5 throughout the entire length of the load container. The longitudinal beams 5 have an outer configuration which is entirely adapted to the interconnection with the switch chassis that occurs on the market. Even if the beams 5 differ from prior art beams in terms of construction, it is of value that their outer configuration be identical with or equivalent to the beams that are provided on existing load containers or alternatively switch flatbed frames. The beams 5 are secured to the lower sheet 4 by means of rivet unions that may be supplemented by adhesive.

The beams 5, 6 and 17 impart increased rigidity to the construction, in order to avoid the above-described problems inherent in failure in the bottom. The beams 5, 6 and 17 are intended to give the bottom only slight downward bending, although their extent in the vertical direction is slight, even so slight that they can be disposed between the upper sheet 3 of the bottom 1 and the lower sheet 4. This limited volume also implies that the beams are light in weight, in particular as the beams are partly constructed from the same insulating material as the core 2. The limited extent in the vertical direction further entails that the load container may be given larger payload. The slight weight of the beams, and thereby of the load container as a whole, entails that the truck combination will either be lighter and thereby more economical in terms of fuel consumption, or alternatively the truck may be given a heavier load than would otherwise have been possible.

Fig. 2 further shows that the beams 5, 6 include a number of plates 7. The transverse beams 17 are constructed in the same manner. The plates 7 are disposed above one another and have adhesive between them. Above the plates, there is provided a piece 8 of core material of such height that the beams 5, 6 are filled.

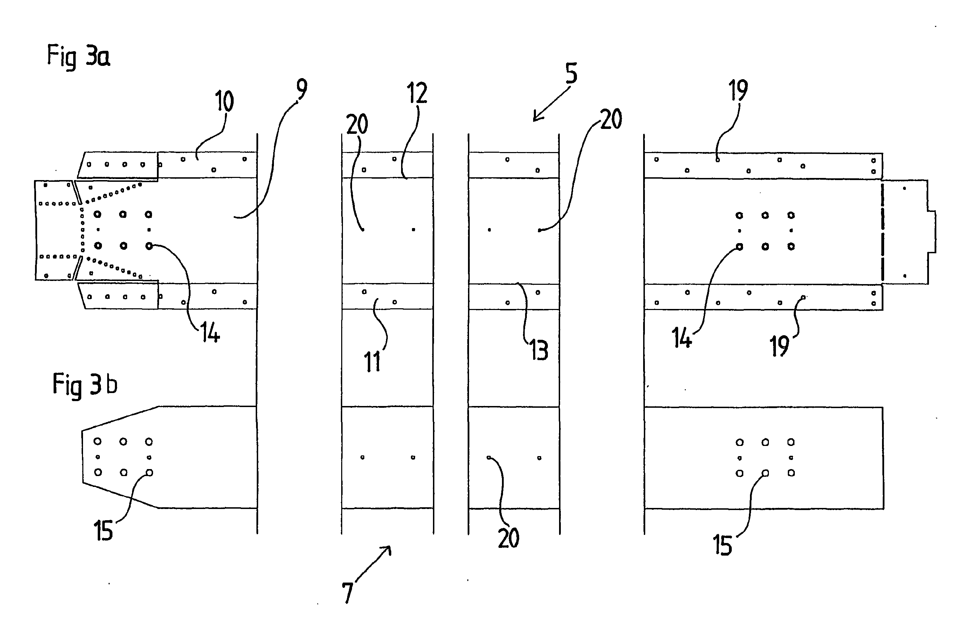

Fig. 3a shows one of the beams 5 seen from above. Since the beam is extremely long in relation to its width, certain parts have been cut away in the Figure. The beam 5 has a bottom portion 9 and two flanges 10, 11 substantially parallel therewith. Between the flanges 10 and 11, which are intended to abut against the underside of the lower sheet 4, there are two substantially transversely directed walls 12 and 13. Taken as a whole, the flanges 10 and 11, the walls 12 and 13, and the bottom portion 9 give a beam 5 of substantially U-shaped cross section. This outer shell of the beam 5 is manufactured from thin sheet metal, in the preferred embodiment only a few millimetres thick.

In order for the beam 5 to have the sought-for flexural rigidity at relatively light weight, the beam is reinforced with a number of plates 7 within the U-shaped cross section. The plates 7, of which one is shown in Fig. 3b, are of elongate configuration substantially corresponding to the bottom portion 9 in the beam 5. However, it is desirable to have a slight spacing between the edges of the plate 7 and the walls 12 and 13, since the edges of the plates 7 are unprocessed and can, therefore, be sharp. By such means, unnecessary wear to the walls 12 and 13 will be avoided. In the preferred embodiment, the spacing is of the order of magnitude of 0.5 mm. The lowermost plate 7 is secured to the bottom portion 9 by a layer of adhesive. Further plates 7 are disposed thereon (not shown) and these are also provided with an adhesive layer between each plate 7.

Holes 19 are provided in the flanges 10 and 11 for securing the beam 5 in the sheet 4 which extends above the beam 5. This securing is put into effect preferably by riveting.

Further, small holes 20 are provided in the bottom portion of the beam and the plates 7 through which any possible entrapped air and excess adhesive may escape.

When the desired number of plates has been provided in the U-profile, any possible remaining space in the beam 5 is filled out with core material 8. This material is also kept in place with the aid of adhesive. Not only the beam 5 but also beams 6 and 17 are constructed in the manner described above.

On loading of the bottom 1, the beams 5, 6 and 17 will be bent downwards. Each one of the adhering plates 7 will, in such instance, also be bent. On bending of the beams 5, 6, 17, the forces involved will be particularly great in the shearing direction in the adhesive joint. Depending upon the properties of the adhesive, one of two major events will occur. In the one case, the adhesive is so tough that the adhesive joint, granted, remains intact, but the plates 7 are permitted to move in the shearing direction in relation to one another to such a degree that the outward bending of the beams 5, 6, 17 will be greater than desired, with the above-outlined disadvantages as a result. In the second case, the adhesive joint is more rigid in the shearing direction, but more brittle, which entails that it more readily breaks on loading, whereafter the plates 7 will be mutually movable. In order to counteract such forces and prevent both downward bending and prevent the adhesive joint from breaking, a mechanical lock has been provided between the plates 7 and the bottom portion 9 of the beam. The mechanical lock is intended to absorb and reduce or possibly totally eliminate forces in the shearing direction of the adhesive joint.

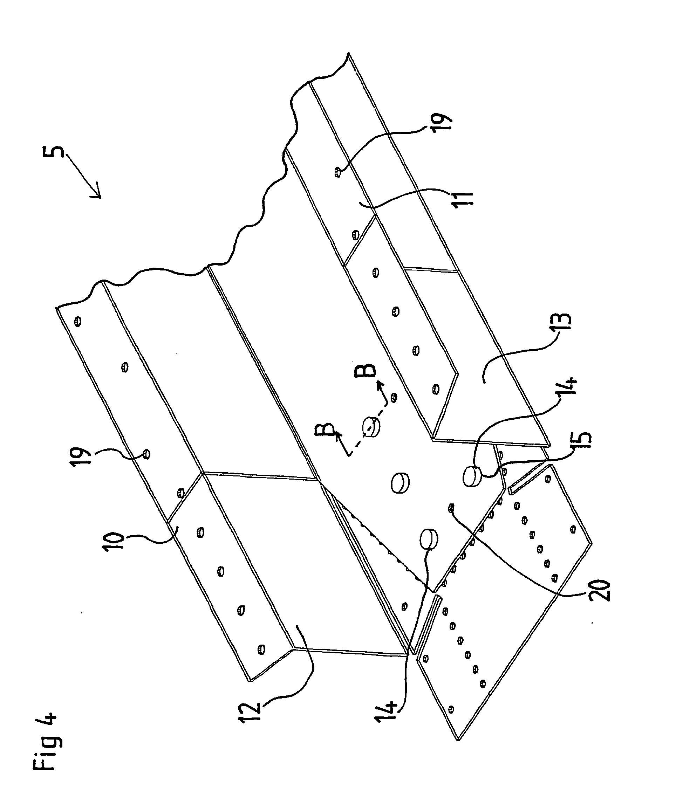

Parts of the mechanical lock are shown in Fig. 4. The mechanical lock consists of two main parts, i.e. a collar 14 which is disposed either in the bottom surface 9 of the beam and/or in one or more of the superjacent plates 7. The collar 14 is an upwardly directed, preferably round and tubular projection. The other main part of the mechanical lock consists of holes 15 which are disposed in one or more plates which are adjacent the plates displaying the collars 14. In Fig. 4, it is shown how a plate 7 has been laid in place in the beam 5, 6 and how the collars 14 fit snugly together with the holes 15. The fit between the collar 14 and the holes 15 should be tight in order to give a strong union which reduces the stresses in the adhesive layer.

Thus, as a result of the union with collars 14 and corresponding holes 15, the plates 7 are mechanically locked to each other. Shearing stresses in the adhesive layer are reduced or possibly wholly eliminated, since the plates 7 are fixed in relation to each other. Since they are fixed in relation to each other, and since the mechanical lock reduces, or even eliminates the risk of failures in the adhesive layer, the downward bending of the beam is considerably reduced, in particular in relation to a construction which is united solely by adhesive. The greater the loading on the beam, the greater would such downward bending have been without the mechanical unions. Consequently, it will be realised that the greater the loading on the beam, the greater the forces are that act between the edges of the holes 15 and the collars 14. Thus, the union is to some extent self-locking, since large contact forces between the collar 14 and the edge of the hole 15 entail that the frictional forces in the contact interface will be great. Movements in the union are thus counteracted on loading of the beam 5, 6, 17.

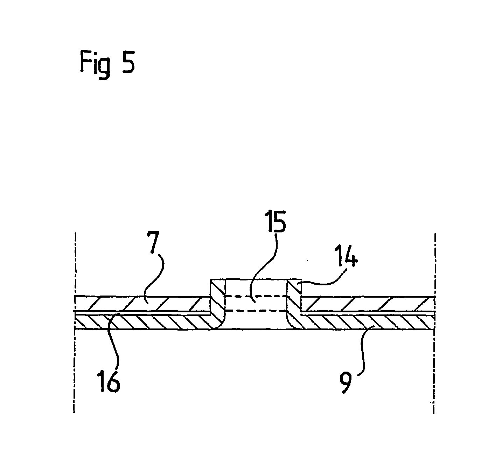

The mechanical lock is shown in detail in Fig. 5. It will be apparent from this Figure how the subjacent plate, in this case the bottom portion 9 of the beam, is provided with a collar 14 which is upwardly directed. The collar is preferably realised using conventional methods, and in the preferred embodiment the collar 14 is of one piece manufacture with the bottom portion 9 of the beam.

Above the bottom portion or surface 9, there is disposed a reinforcing plate 7. Between the bottom portion 9 and the reinforcing plate 7, there is, as was mentioned previously, an adhesive layer 16. The hole 15 in the plate 7 is passed with tight fit on the collar 14. Depending upon the extent of the collar 14 in the vertical direction, holes are required in the plate or plates above if a further one or more plates 7 are disposed on the collar 14 above the plate already disposed in position.

When it is desired to interconnect a number of plates 7 above one another, these are suitably provided with both holes 15 and collars 14. With the aid of the holes 15, they are connected to subjacent plates 7 and with the aid of the collars 14, to the superjacent plates.

The present invention may be modified without departing from the scope of the appended Claims.

## Claims

1. A load container for use on a truck chassis, the container being disposed for release from the chassis and for a free-standing position in which the container rests on a number of support legs, and the container having a roof, a number of side walls and a bottom (1) which includes at least one longitudinal beam (5, 6) for supporting the bottom (1), **characterised in that** the beam (1) includes at least a first and second plate (7, 9) with an adhesive layer (16) therebetween; and that the plates are mechanically locked to one another for preventing or reducing shearing stresses in the adhesive joint (16).

2. The load container as claimed in Claim 1, **characterised in that the** mechanical lock between the plates (7) included in the beam (5, 6) includes holes provided in the first plate with collars (14) directed towards the second plate and insertible in holes (15) provided in the second plate.

3. The load container as claimed in Claim 2, **characterised in that** the fit of the collars (14) in the holes (15) provided is tight.

4. The load container as claimed in Claim 2 or 3, **characterised in that** the collars (14) are of one piece manufacture with the first plate (7, 9) by the burring or curling of holes.

5. The load container as claimed in any of Claims 1 to 4, **characterised in that** the beam (5, 6) is secured in the bottom (1) of the container with the aid of screws, bolts or rivets.

6. A beam comprising at least a first and a second plate (7, 9) with an adhesive layer therebetween, **characterised in that** the plates (7, 9) have a mechanical lock to one another for preventing or reducing shearing stresses in the adhesive joint, and that the plates (7, 9) are substantially of the same mutual length.

7. The beam as claimed in Claim 6, **characterised in that** the lock comprises holes provided in the first plate with collars (14) directed towards the second plate and insertible in holes (15) provided in the second plate.

8. The beam as claimed in Claim 7, **characterised in that** the fit in the mechanical lock is tight.

9. The beam as claimed in Claim 7 or 8, **characterised in that** the collars are of one piece manufacture with the first plate.

10. The beam as claimed in any of Claims 6 to 9, **characterised in that** it includes polystyrene.

## Patentansprüche

1. Auswechselbehälter für den Einsatz auf dem Fahrgestell eines Lastkraftwagens, wobei der Behälter derart angeordnet ist, dass er von dem Fahrgestell abgenommen werden und frei stehend positioniert werden kann, wobei er dann auf einer Reihe von Stützbeinen steht, und der Behälter eine Abdeckung, Seitenwände und einen Boden (1) besitzt, der mindestens einen Längsträger (5, 6) zur Abstützung des Bodens (1) aufweist, **dadurch gekennzeichnet, dass** der Träger (1) mindestens eine erste und zweite Platte (7, 9) mit einer dazwischenliegenden Haftschicht (16) besitzt und dass die Platten mechanisch miteinander verriegelt sind, um Schubspannungen an der Haftverbindungsstelle (16) zu verhindern oder zu reduzieren.

2. Auswechselbehälter nach Anspruch 1, **dadurch gekennzeichnet, dass** die mechanische Verriegelung zwischen den Platten (7), die an dem Träger (5, 6) vorhanden ist, Löcher aufweist, die an der ersten Platte vorhanden sind, wobei Bunde oder Muffen (14) zu der zweiten Platte hin geführt werden und in Löcher (15) eingesteckt werden können, die sich an der zweiten Platte befinden.

3. Auswechselbehälter nach Anspruch 2, **dadurch gekennzeichnet, dass** es sich bei der Passung der Bunde oder Muffen (14) in den Löchern (15) um eine feste Passung handelt.

4. Auswechselbehälter nach Anspruch 2 oder 3, **dadurch gekennzeichnet, dass** die Bunde oder Muffen (14) durch Entgraten oder Kräuseln der Löcher aus einem Stück mit der ersten Platte (7, 9) gefertigt sind.

5. Auswechselbehälter nach einem der Ansprüche 1 bis 4, **dadurch gekennzeichnet, dass** der Träger (5, 6) am Boden (1) des Behälters mit Hilfe von Schrauben, Bolzen oder Nieten befestigt wird.

6. Träger mit mindestens einer ersten und einer zweiten Platte (7, 9) mit einer dazwischenliegenden Haftschicht, **dadurch gekennzeichnet, dass** die Platten (7, 9) mechanisch miteinander verriegelt sind, um Schubspannungen an der Haftverbindungsstelle zu verhindern oder zu reduzieren, und dass die Platten (7, 9) im wesentlichen dieselbe Länge besitzen.

7. Träger nach Anspruch 6, **dadurch gekennzeichnet, dass** die Verriegelung Löcher aufweist, die an der ersten Platte vorhanden sind, wobei Bunde oder Muffen (14) zu der zweiten Platte hin geführt werden und in Löcher (15) eingesteckt werden können, die sich an der zweiten Platte befinden.

8. Träger nach Anspruch 7, **dadurch gekennzeichnet, dass** es sich bei der Passung in der mechanischen Verriegelung um eine feste Passung handelt.

9. Träger nach Anspruch 7 oder 8, **dadurch gekennzeichnet, dass** die Bunde oder Muffen aus einem Stück mit der ersten Platte gefertigt sind.

10. Träger nach einem der Ansprüche 6 bis 9, **dadurch gekennzeichnet, dass** er aus Polystyrol besteht.

## Revendications

1. Conteneur pour charges destiné à être utilisé sur un châssis de camion, le conteneur étant disposé pour être dégagé du châssis et pour tenir tout seul en position en reposant sur un certain nombre de jambes de support, et le conteneur ayant un haut, un certain nombre de parois latérales et un fond (1) qui comporte au moins une poutre longitudinale (5, 6) pour supporter le fond (1), **caractérisé en ce que** la poutre (1) comporte au moins une première et une seconde plaque (7, 9) avec une couche d'adhésif interposée entre elles ; et **en ce que** les plaque sont verrouillées mécaniquement l'une à l'autre pour empêcher ou réduire les efforts de cisaillement dans le joint d'adhésif (16).

2. Conteneur pour charges selon la revendication 1, **caractérisé en ce que** le verrouillage mécanique entre les plaques (7) que comporte la poutre (5, 6) comporte des trous prévus dans la première plaque avec des collets (14) dirigés vers la seconde plaque et insérables dans des trous (15) prévus dans la seconde plaque.

3. Conteneur pour charges selon la revendication 2, **caractérisé en ce que** les collets (14) s'ajustent dans les trous (15) à ajustement serré.

4. Conteneur pour charges selon l'une quelconque des revendications 2 ou 3, **caractérisé en ce que** les collets (14) sont fabriqués d'une pièce avec la première plaque (7, 9) par soyage ou roulage des trous.

5. Conteneur pour charges selon l'une quelconque des revendications 1 à 4, **caractérisé en ce que** la poutre (5, 6) est fixée au fond (1) du conteneur à l'aide de vis, de boulons ou de rivets.

6. Poutre comprenant au moins une première et une seconde plaque (7, 9) avec une couche d'adhésif interposée entre elles, **caractérisée en ce que** les plaques (7, 9) présentent un verrouillage mécanique de l'une avec l'autre pour empêcher ou réduire les efforts de cisaillement dans le joint d'adhésif, et **en ce que** les plaques (7, 9) ont sensiblement la même longueur mutuelle.

7. Poutre selon la revendication 6, **caractérisée en ce que** le verrouillage comporte des trous prévus dans la première plaque avec des collets (14) dirigés vers la seconde plaque et insérables dans des trous (15) prévus dans la seconde plaque.

8. Poutre selon la revendication 7, **caractérisée en ce que** l'ajustement du verrouillage mécanique est un ajustement serré.

9. Poutre selon l'une quelconque des revendications 7 ou 8, **caractérisée en ce que** les collets (14) sont fabriqués d'une pièce avec la première plaque.

10. Poutre selon l'une quelconque des revendications 6 à 9, **caractérisée en ce qu'**elle comporte du polystyrène.
